(19) Europäisches Patentamt
European Patent Office
Office européen des brevets

(11) Veröffentlichungsnummer: **0 021 014**
**B1**

# (12) EUROPÄISCHE PATENTSCHRIFT

(45) Veröffentlichungstag der Patentschrift: **20.10.82**

(51) Int. Cl.³: **C 09 D 3/80**, C 08 L 33/00, C 08 L 39/00, C 09 D 5/40, C 25 D 13/06

(21) Anmeldenummer: **80102718.6**

(22) Anmeldetag: **16.05.80**

(54) **Lackbindemittel und ihre Verwendung für Elektrotauchlacke.**

(30) Priorität: **20.06.79 DE 2924786**

(43) Veröffentlichungstag der Anmeldung: **07.01.81 Patentblatt 81/1**

(45) Bekanntmachung des Hinweises auf die Patenterteilung: **20.10.82 Patentblatt 82/42**

(84) Benannte Vertragsstaaten: **BE DE FR GB IT NL**

(56) Entgegenhaltungen:
**DE-A-2 460 785**
**US-A-3 692 746**

(73) Patentinhaber: **BASF Aktiengesellschaft, Carl-Bosch-Strasse 38, D-6700 Ludwigshafen (DE)**

(72) Erfinder: **Gimpel, Juergen, Dr., Osloer Weg 44, D-6700 Ludwigshafen (DE)**
Erfinder: **Hartmann, Heinrich, Dr., Weinheimer Strasse 46, D-6703 Limburgerhof (DE)**
Erfinder: **Schenk, Hans-Uwe, Dr., Erlenweg 6, D-6706 Wachenheim (DE)**

**EP 0 021 014 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Lackbindemittel und ihre Verwendung für Elektrotauchlacke

Die Erfindung betrifft Lackbindemittel auf Basis eines Carboxylgruppen- und verkappte Isocyanatgruppen enthaltenden Copolymerisats und deren Verwendung für Elektrotauchlacke.

Bindemittel aus Acrylatharzen, die durch Isocyanat vernetzt werden, sind für die Elektrotauchlackierung bekannt. So beschreibt die US-A 3883483 eine kationische abscheidbare Polymerzusammensetzung, die das Umsetzungsprodukt eines halbseitig verkappten Diisocyanats mit einer äthylenisch ungesättigten Hydroxylverbindung wie Hydroxyäthylacrylat enthält. Auf diese Weise ist jedoch die für die Vernetzung erforderliche Isocyanatgruppe über eine Esterbindung an die Kohlenstoffkette des Polymers gebunden. Ein Teil der Esterbindungen wird durch Hydrolyse bei der Badalterung des Elektrotauchlacks gespalten. Dadurch wird die Zusammensetzung der für die Vernetzung erforderlichen Bestandteile im Laufe der Badalterung geändert. Dies führt zu einer Verschlechterung der chemischen Beständigkeit und des Korrosionsschutzes der abgeschiedenen Lacke.

Die US-A 3694416 beschreibt Überzugsmittel, hergestellt aus aliphatisch konjugierten Dienen und verkapptem Vinylisocyanat, die mit einem hydroxylgruppenhaltigen Polymeren vernetzt werden. Dieses Zweikomponentensystem enthält jedoch keine für die Elektrotauchabscheidung erforderlichen ionogenen Gruppen.

Die US-A 3692746 bezieht sich auf Überzugsmittel aus Vinylchlorid, verkapptem Vinylisocyanat und anderen äthylenisch ungesättigten Comonomeren. Diese Überzugsmittel werden durch Emulsionspolymerisation mit Redoxinitiatoren hergestellt. Diese Emulsionen eignen sich jedoch nicht als Elektrotauchlacke, da sie zu viele niedermolekulare ionogene Begleitstoffe enthalten und die Badleitfähigkeit zu gross ist.

Die in der BE-A 652401 beschriebenen Polymerisate aus Acrylnitril, verkapptem Vinylisocyanat und anderen äthylenisch ungesättigten Comonomeren für die Folienherstellung wurden ebenfalls durch Emulsionspolymerisation mit Redoxinitiatoren hergestellt und eignen sich daher auch nicht als Elektrotauchlacke.

Der vorliegenden Erfindung lag die Aufgabe zugrunde, Lackbindemittel, insbesondere solche für Elektrotauchlacke zu entwickeln, die eine definierte Menge an verkappten Isocyanatgruppen enthalten, die direkt an die Kohlenstoffkette des Polymers gebunden sind, wobei im Polymermolekül gegebenenfalls weitere reaktive Gruppen enthalten sein können, so dass sie als selbst- und fremdvernetzende Bindemittel eingesetzt werden können.

In der DE-A 2460785 werden Bindemittel für Pulverlacke beschrieben, die verkapptes Vinylisocyanat als eines der Monomeren enthalten. Die in dieser DE-OS beschriebenen Bindemittel sind jedoch für die Elektrotauchlackierung nicht geeignet, da sie eine zu geringe Säurezahl besitzen.

Überraschenderweise wurde gefunden, dass sich Polymerisate herstellen lassen, die neben dem verkappten Vinylisocyanat die für anionische Elektrotauchlacke erforderliche Menge an Carboxylgruppen enthalten, ohne dass das verkappte Vinylisocyanat unter den Polymerisationsbedingungen zu einem überwiegenden Teil umgelagert und hydrolysiert wird. In der Literatur [Die makromol. Chem. 172 (1973) 27-47] wird verkapptes Vinylisocyanat analog den Vinylharnstoffen als sehr hydrolyseempfindlich beschrieben:

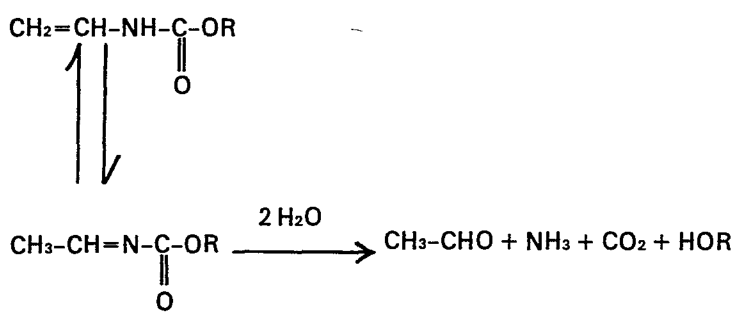


Eine nennenswerte Hydrolyse wurde jedoch bei der Herstellung der erfindungsgemässen, insbesondere für die anionische Elektrotauchlackierung erforderlichen Copolymerisate nicht beobachtet.

Gegenstand der vorliegenden Erfindung sind Lackbindemittel auf Basis eines Carboxylgruppen und verkappte Isocyanatgruppen enthaltenden Copolymerisats, das durch zumindest teilweise Salzbildung mit Ammoniak oder einer organischen Base wasserlöslich oder wasserdispergierbar ist, die dadurch gekennzeichnet sind, dass das Copolymerisat einpolymerisiert enthält

(A) mindestens eine α,β-olefinisch ungesättigte Carbonsäure mit 3 bis 5 Kohlenstoffatomen oder einen Halbester einer α,β-olefinisch ungesättigten bis 5 Kohlenstoffatome enthaltenden Dicarbonsäure,

(B) 20 bis 40 Gewichtsprozent eines mit einem CH-, OH- oder NH-aciden Verkappungsmittel verkappten N(1-alkenyl)-isocyanats,

(C) 0 bis 40 Gewichtsprozent einer oder mehrerer copolymerisierbarer olefinisch ungesättigter Verbindungen mit gegenüber Isocyanatgruppen reaktiven Wasserstoffatomen und

(D) 0 bis 75 Gewichtsprozent einer oder mehrerer unter (A) bis (C) nicht genannter copolymerisierbaren olefinisch ungesättigten Verbindungen,

mit der Massgabe, dass das Copolymerisat eine Säurezahl zwischen 35 und 150 (mg KOH/g Copolymerisat) sowie ein mittleres Molekulargewicht zwischen 1000 und 20000 aufweist und die Summe der unter (A) bis (D) genannten Prozentzahlen 100 ist.

Die erfindungsgemässen für die anionische Elektrotauchlackierung geeigneten Bindemittel bestehen aus einem Copolymeren mit einem Molgewicht zwischen 1000 und 20000, wobei der Anteil an einpolymerisierter olefinisch ungesättigter Verbindung mit Carboxylgruppen (A) mengenmässig so ausgewählt ist, dass das Copolymerisat eine Säurezahl zwischen 35 und 150

$$\frac{\text{mg KOH}}{\text{g Substanz}}$$

aufweist und 20-40 Gewichtsprozent der Komponente B einpolymerisiert sind.

Der daraus hergestellte Elektrotauchlack enthält 7-20 Gewichtsprozent eines Ammonium- bzw. Aminsalzes des erfindungsgemässen Copolymerisats.

Zu den Aufbaukomponenten des erfindungsgemässen Lackbindemittels ist im einzelnen folgendes auszuführen:

(A) Als Komponente (A) kommen α,β-olefinisch ungesättigte Mono- und Dicarbonsäuren mit 3 bis 5 Kohlenstoffatomen, wie Acrylsäure, Methacrylsäure, Maleinsäure, Itaconsäure sowie Halbester von α,β-olefinisch ungesättigten bis 5 Kohlenstoffatomen enthaltenden Dicarbonsäuren mit $C_1$- bis $C_8$-Alkanolen, wie den Monoestern der Maleinsäure, Fumarsäure oder Itaconsäure und deren Mischungen in Frage. Besonders bevorzugt als Komponente (A) sind Acrylsäure und Methacrylsäure. Komponente (A) ist im erfindungsgemässen Copolymerisat in solchen Mengen einpolymerisiert, dass dessen Säurezahl-Bereich zwischen 35 und 150, vorzugsweise zwischen 40 und 100 (mg KOH/g Copolymerisat) liegt.

(B) Die Komponente (B) ist ein Addukt aus einem N(1-alkenyl)-isocyanat und einem CH-, OH- oder NH-aciden Verkappungsmittel. Geeignete N(1-alkenyl)-isocyanate sind solche mit 2 bis 4 Kohlenstoffatomen in der Alkenylgruppe, vorzugsweise Vinylisocyanat und/oder Propenylisocyanat. Als Verkappungsmittel zur Herstellung der Komponente (B) können beispielsweise Monophenole wie Phenol, Kresol, Trimethylphenol, primäre Alkohole oder sekundäre Alkohole wie Isopropanol oder Cyclohexanol, tertiäre Alkohole, wie t-Butanol oder t-Amylalkohol, leicht enolisierbare Verbindungen, wie Acetessigester, Acetylaceton, Malonsäurederivate wie Malonsäurediester mit 1-8 Kohlenstoffatomen in der Alkoholkomponente, Malonsäuredinitril, sekundäre aromatische Amine wie N-Methylanilin, N-Methyltoluidin oder N-Phenyltoluidin, Imide, wie Succinimid und Phthalimid, Lactame wie ε-Caprolactam, δ-Valerolactam oder Laurinlactam, sowie Oxime wie Acetonoxim, Butanonoxim und Cyclohexanonoxim eingesetzt werden. Besonders bevorzugt als Verkappungsmittel der N(1-alkenyl)-isocyanate sind t-Butanol, Cyclohexanol und Caprolactam.

Die Herstellung des verkappten N(1-alkenyl)-isocyanats, wie z.B. des Vinylisocyanats kann z.B. nach einer Analogievorschrift in Houben-Weyl Methoden der organischen Chemie, Band 14/2, (1963), Seite 61-70 erfolgen. Sie wird vorzugsweise in Gegenwart von Lösungsmittel durchgeführt. Bei der Umsetzung des N(1-alkenyl)-isocyanats (Vinylisocyanats) mit dem Verkappungsmittel werden etwa äquimolare Mengen eingesetzt. Ein Überschuss des Isocyanats ist zu vermeiden, da dies später zu Vernetzungen Anlass geben könnte. Komponente (B) ist in einer Menge von 20 bis 40, vorzugsweise 25 bis 35 im erfindungsgemässen Copolymerisat einpolymerisiert.

(C) Als reaktive Monomere (C) kommen solche copolymerisierbaren olefinisch ungesättigten Verbindungen in Frage, die gegenüber Isocyanatgruppen reaktive Wasserstoffatome enthalten, die also beispielsweise OH- oder NH-Gruppen tragen. Beispiele dafür sind Monoester der Acryl- oder Methacrylsäure mit mehrwertigen, insbesondere zweiwertigen Alkoholen, wie Hydroxyäthyl- oder Hydroxypropyl(meth)acrylat und Butandiolmonoacrylat oder Monoester der genannten Säuren mit Polyetherdiolen, wie Polypropylenglykol-(meth)acrylat, sowie Allylalkohol und 1-Butendiol-(3,4). Des weiteren kann N-Methylol(meth)acrylamid verwendet werden. Besonders bevorzugt sind die Ester der (Meth)acrylsäure mit Diolen mit 2-4 Kohlenstoffatomen, insbesondere Hydroxypropylacrylat und Hydroxyäthylacrylat.

Komponente (C) ist im erfindungsgemässen Copolymerisat in einer Menge von 0 bis 40, vorzugsweise 21 bis 30 Gewichtsprozent einpolymerisiert.

(D) Als Komponente (D) kommen andere unter (A) bis (C) nicht genannte copolymerisierbare olefinisch ungesättigte Verbindungen in Betracht, wie Ester der Acryl- und Methacrylsäure mit Monoalkoholen, die 1-18, vorzugsweise 1-8 Kohlenstoffatome aufweisen, wie Methylacrylat, Äthylacrylat, Butylacrylat, Äthylhexylacrylat und Methylmethacrylat. Des weiteren kommen alle anderen copolymerisierbaren ungesättigten Verbindungen in Frage, insbesondere Vinylester von Carbonsäuren mit 1 bis 10 Kohlenstoffatomen, wie Vinylacetat, Vinylaromaten, wie Styrol, Acrylnitril und ungesättigte Triglyceride, wie isomerisiertes Leinöl. Es können auch Mischungen der genannten Monomere verwendet werden.

Komponente (D) ist im erfindungsgemässen Copolymerisat in einer Menge von 0 bis 75, vorzugsweise 20 bis 48 Gewichtsprozent einpolymerisiert.

Die Herstellung der erfindungsgemässen Copolymeren erfolgt zweckmässigerweise in polaren, keine OH-Gruppen aufweisenden Lösungsmitteln, wie z.B. Äthern, wie Tetrahydrofuran oder Estern, wie Essigester oder Methylglykolacetat, in Gegenwart radikalbildender Initiatoren, wie Azobiscarbonsäureamiden, Azobiscarbonsäurenitrilen oder Peroxiden im allgemeinen bei Temperaturen zwischen 50 und 120°C, vorzugsweise zwischen 60 und 90°C, gegebenenfalls in Gegenwart von Reglern wie t-Dodecylmercaptan oder Diisopropylxanthogendisulfid.

Beispiele für besonders bevorzugte Lackbindemittel sind Copolymerisate aus 8 bis 12 Gewichtsprozent Acryl- oder Methacrylsäure, 25 bis 30 Gewichtsprozent mit Caprolactam verkapptem Vinyl- oder Propenylisocyanat, oder 21 bis 25 Gewichtsprozent Hydroxypropyl- oder Hydroxyäthylacrylat und 33 bis 46 Gewichtsprozent der Komponente D.

Die erfindungsgemässen Copolymerisate sind unvernetzte Produkte mit einem Molgewicht zwischen 1000 und 20000, vorzugsweise zwischen 2000 und 10000 (gemessen mit dem Dampfdrukkosmometer). Die K-Werte (nach Fikentscher) (3%ig in Aceton) liegen dementsprechend zwischen 15 und 35, vorzugsweise zwischen 18 und 28.

Die erfindungsgemässen Copolymerisate enthalten freie Carboxylgruppen sowie verkappte Isocyanatgruppen und gegebenenfalls gegenüber diesen Gruppen reaktionsfähige Strukturen.

Diese Copolymerisate werden erfindungsgemäss als Lackbindemittel verwendet und sind durch zumindest teilweise Salzbildung mit Ammoniak oder organischen Basen wasserlöslich bzw. wasserdispergierbar.

Die Copolymerisate werden dazu zumindest teilweise mit Ammoniak oder einem Amin neutralisiert. Als Neutralisationsmittel können die üblichen Amine, Diamine oder Ammoniak dienen. Bevorzugt sind Diisopropanolamin und Dimethyläthanolamin. Der Neutralisationsgrad für die Anwendung der erfindungsgemässen Lackbindemittel in wässrigem Medium liegt zwischen 30 und 100%.

Ausser dem erfindungsgemässen Bindemittel kann der Lack polyfunktionelle Vernetzungsmittel, wie höhermolekulare Hydroxyl- und/oder Carboxylgruppen aufweisende Polykondensate, Polyaddukte und/oder Polymerisate sowie Pigmente, wie z.B. Titandioxid, Talkum und Russ je nach Anwendungszweck in Mengen von 10–60, vorzugsweise 20–50 Gewichtsteilen, bezogen auf 100 Gewichtsteile Bindemittel enthalten. Darüber hinaus können noch anorganische und organische Buntpigmente in Mengen von bis zu 5 Gewichtsteilen sowie Füllstoffe in Mengen von ebenfalls bis zu 5 Gewichtsteilen enthalten sein. Verlaufsmittel können bis zu 10 Teilen, Wachse zur Erhöhung der Kratzfestigkeit bis zu 10 Teilen und Katalysatoren für die Entkappungsreaktion bis zu 2 Teilen, jeweils bezogen auf 100 Teile Bindemittel enthalten sein.

Die erfindungsgemässen Lackbindemittel werden insbesondere für die anodische Elektrotauchlackierung verwendet, und zwar als selbstvernetzendes Bindemittel oder auch als fremdvernetzendes Bindemittel.

Mit den erfindungsgemässen Elektrotauchlacken lassen sich vor allem metallische Gegenstände, z.B. aus Eisen, Stahl und Aluminium beschichten.

Die Herstellung der anionischen Elektrotauchbäder erfolgt wie üblich, beispielsweise wie in W. Machu, Elektrotauchlackierung S. 163 ff beschrieben. Der Feststoffgehalt der Elektrotauchbäder liegt im allgemeinen zwischen 8 und 15 Gewichtsprozent, der pH-Wert zwischen 7,2 und 9,5.

Die mit dem erfindungsgemässen Bindemittel erhaltenen Überzüge weisen eine hohe Härte auf, sind sehr elastisch und chemikalienbeständig. Dieses hohe Eigenschaftsniveau der Lacke wird durch die Badalterung nicht negativ beeinflusst.

Die in den Beispielen genannten Teile und Prozente sind, soweit nicht anders angegeben, Gewichtsteile bzw. Gewichtsprozente.

Herstellung der Komponente (B)

(B 1) N-Vinylcarbaminsäure-tert.-Butylester:

In einem Reaktionsgefäss, versehen mit einem Intensivkühler (mit Kühlsole), Rührer, Thermometer und Zulaufgefäss werden 69 Teile Vinylisocyanat und 70 Teile Äthylacetat vorgelegt. Bei 40°C werden innerhalb von 1 Stunde 74 Teile tert.-Butanol, 73 Teile Äthylacetat und 0,01% Dibutylzinndilaurat zugegeben. Anschliessend wird noch 10 Stunden bei 40°C nachreagieren gelassen. Es entsteht eine hellgelbe klare Lösung. Isocyanatgehalt (verkappt): 14,7%.

(B 2) N-Vinylcarbaminsäure-cyclohexylester:

In einem Reaktionsgefäss werden 69 Teile Vinylisocyanat und 89,5 Teile Äthylacetat vorgelegt und auf 40°C aufgeheizt. Dazu wird innerhalb von 1 Stunde eine Mischung aus 110 Teilen Cyclohexanol und 89,5 Teilen Äthylacetat (0,02% Dibutylzinndilaurat als Katalysator) gegeben. Nachreaktionszeit: 2 Stunden bei 40°C. Man erhält eine hellgelbe Lösung, aus der sich beim Abkühlen das Reaktionsprodukt in Form von Kristallen abscheidet. Isocyanat-Gehalt (verkappt): 11,7%.

(B 3) Vinylisocyanat-Caprolactam-Addukt:

In einem Reaktionsprodukt werden 113 Teile ε-Caprolactam und 91 Teile Äthylacetat (+ 0,015% Dibutylzinndilaurat) vorgelegt und auf ca. 50°C aufgeheizt. Dazu wird innerhalb von 1 Stunde eine Mischung aus 69 Teilen Vinylisocyanat und 91 Teilen Äthylacetat zugetropft. Nachreaktionszeit: 5 Stunden. Man erhält eine hellgelbe klare Lösung. Isocyanat-Gehalt (verkappt): 11,5%.

Beispiel 1

In einem mit Rührer, Rückflusskühler und Innenthermometer ausgestatteten Reaktionsgefäss werden je 30 Teile der Zulaufmischung 2 und 3 vorgelegt. Zulauf 2 besteht aus 2 Teilen Diisopropylperoxiddicarbonat und 32 Teilen Essigester. Zulauf 3 besteht aus 21 Teilen Hydroxypropylacrylat, 10 Teilen Acrylsäure, 10 Teilen Styrol, 32 Teilen Isobutylacrylat und 1,3 Teilen t-Dodecylmercaptan. Die Vorlage wird auf 60°C aufgeheizt, dann wird Zulauf 1, bestehend aus 54 Teilen der Lösung des verkappten Isocyanats (B 2) und der Rest von Zulauf 2 und 3 gleichmässig innerhalb von 4 Stunden bei 60°C zugegeben. Nach Zulaufende wird noch 1 Stunde bei 60°C nachpolymerisiert. Dann wird während einer Stunde nochmal 1 Teil Initiator nachdosiert und wiederum eine Stunde nachpolymerisiert. Man erhält eine klare Lösung eines Harzes mit dem K-Wert von 26 und einem Feststoffgehalt von 60%. Die Säurezahl beträgt 81,5.

Prüfung als Klarlack

Das Polymerisat wird zu 70% mit Dimethyläthanolamin neutralisiert. Mit vollentsalztem Wasser wird eine 10%ige wässrige Dispersion hergestellt. Mit dieser Dispersion werden zinkphosphatierte Bleche anodisch bei 250–300 V und einer Abscheidezeit von 2 Minuten lackiert. Die Überzüge werden 30 Minuten bei 220°C eingebrannt. Man erhält einen 20 µm dicken acetonbeständigen Lacküberzug mit einer Pendelhärte von 140 Sekunden (DIN 53157), einer Erichsen-Tiefung von 8 mm, der nach 96 Stunden Salzsprühtest nach ASTM-B 117/64 7 mm Unterrostung aufweist.

Nach Alterung von 33 Tagen bei Zimmertemperatur werden mit derselben Dispersion erneut zinkphosphatierte Bleche beschichtet. Die Abscheidespannung und die Lackeigenschaften waren dieselben wie bei der Erstbeschichtung.

Prüfung als Graulack

Das Polymerisat wird zu 50% mit Dimethyläthanolamin neutralisiert. Es wurden 30 Teile Pigment, bezogen auf 100 Teile Bindemittel, zugegeben. Die Pigmentmischung besteht aus 20 Teilen Titandioxid, 78 Teilen Talkum und 2 Teilen Flammruss. Pigment und Bindemittel werden in der Kugelmühle miteinander verrieben und dann mit vollentsalztem Wasser auf den Feststoffgehalt von 10% eingestellt. Mit dieser Dispersion werden zinkphosphatierte und nicht vorbehandelte Stahlbleche beschichtet. Die Überzüge werden 30 Minuten bei 220°C eingebrannt. Man erhält einen acetonbeständigen Lacküberzug mit einer Pendelhärte von 80 Sekunden, einem Erichsen-Wert von 10 mm, der nach 24 Stunden Salzsprühtest nach ASTM-B 117/64 5 mm Unterrostung zeigt. Nach Alterung von 32 Tagen bei Zimmertemperatur werden aus der Dispersion erneut Bleche beschichtet. Die Abscheidespannung und die Lackeigenschaften waren dieselben wie bei der Erstbeschichtung.

Beispiel 2

In einem mit Rührer, Rückflusskühler und Innenthermometer ausgestatteten Reaktionsgefäss werden je 20% der Zulaufmischung 1, 2 und 3 und 39,5 Teile Essigester vorgelegt. Zulauf 1 besteht aus 40 Teilen der Lösung des verkappten Isocyanats (B 1) und 28,5 Teilen Essigester. Zulauf 2 besteht aus 16 Teilen Hydroxyäthylacrylat, 49 Teilen Butylacrylat und 15 Teilen Acrylsäure. Zulauf 3 enthält 2 Teile Diisopropylperoxiddicarbonat. Die Vorlage wird auf 60°C aufgeheizt und alle Zuläufe werden innerhalb von 3 Stunden gleichmässig zugegeben. Nach Zulaufende wird 1 Stunde lang nachpolymerisiert. Dann wird während 1 Stunde ein Teil Initiator nachdosiert und wiederum 1 Stunde lang nachpolymerisiert. Man erhält eine klare Lösung eines Harzes mit einem K-Wert von 25 und dem Feststoffgehalt von 48,6%. Die Säurezahl beträgt 133.

Prüfung als Klarlack

Das Polymerisat wird zu 40% mit Dimethyläthanolamin neutralisiert. Mit vollentsalztem Wasser wird eine 10%ige Dispersion hergestellt, mit der bei 60 V phosphatierte Stahlbleche beschichtet werden. Die Abscheidezeit beträgt 2 Minuten. Die Überzüge werden 30 Minuten bei 220°C eingebrannt. Man erhält einen 16 µm dicken acetonbeständigen Lacküberzug mit einer Pendelhärte von 143 Sekunden und einer Erichsen-Tiefung von 9,8 mm, der nach 24 Stunden Salzsprühtest eine Unterrostung von 5 mm aufweist. Nach Alterung von 28 Tagen bei Zimmertemperatur werden aus der Dispersion erneut Bleche beschichtet. Die Abscheidespannung und die Lackeigenschaften waren dieselben wie bei der Erstbeschichtung.

Beispiel 3

Die Polymerisation erfolgt analog Beispiel 2. Die Vorlage besteht aus je 20% von Zulauf 1, 2 und 3 und 20 Teilen Essigester. Zulauf 1 enthält 70 Teile der Lösung des verkappten Isocyanats (B 3). Zulauf 2 besteht aus 25 Teilen Hydroxypropylacrylat, 30 Teilen 2-Äthylhexylacrylat, 4 Teilen Styrol, 6 Teilen Methacrylsäure und 1,0% t-Dodecylmercaptan. Zulauf 3 und 4 enthalten 2 bzw. 1 Teil Diisopropylperoxiddicarbonat als Initiator.

Nach der Polymerisation erhält man die klare Lösung eines Harzes mit einem K-Wert von 28, dem Feststoffgehalt von 71%, dessen Säurezahl 36,5 beträgt.

Prüfung als Klarlack

Das Polymerisat wird zu 90% mit Diisopropanolamin neutralisiert. Mit vollentsalztem Wasser wird eine 10%ige Dispersion hergestellt, mit der bei 100 V nicht vorbehandelte Stahlbleche anodisch beschichtet werden. Die Abscheidezeit beträgt 2 Minuten. Die Überzüge werden 30 Minuten bei 170°C eingebrannt. Man erhält einen 30 µm dicken acetonbeständigen Lacküberzug mit Pendelhärte von 162 Sekunden und einer Erichsen-Tiefung von 2 mm, der nach 24 Stunden Salzsprühtest 8 mm Unterrostung aufweist. Nach 35tägiger Alterung bei Zimmertemperatur werden aus der Dispersion erneut Bleche beschichtet. Die Abscheidespannung und die Lackeigenschaften waren genauso wie bei der Erstbeschichtung.

Beispiel 4

Die Polymerisation erfolgt analog Beispiel 3. Die Vorlage besteht aus je 20% von Zulauf 1, 2 und 3 und 16 Teilen Essigester. Zulauf 1 enthält 78 Teile der Lösung des verkappten Isocyanats (B 3). Zulauf 2 besteht aus 42 Teilen Butylacrylat, 19 Teilen Acrylsäure und 3 Teilen t-Dodecylmercaptan als Regler. Zulauf 3 und 4 sind genauso wie beim Beispiel 3.

Nach Polymerisationsende erhält man eine klare Harzlösung mit einem K-Wert von 18, dem Feststoffgehalt von 69,7% und einer Säurezahl von 132.

Prüfung als Klarlack

Analog Beispiel 2 wird eine 10%ige wässrige Dispersion hergestellt, bei der das Harz zu 30% mit Dimethyläthanolamin neutralisiert ist. Der nach 2 Minuten bei 170 V auf zinkphosphatierten Stahlblechen abgeschiedene Lack wird 30 Minuten bei 170°C eingebrannt. Er ist acetonbeständig und weist eine Pendelhärte von 100 Sekunden bei einer Erichsen-Tiefung von mehr als 10 mm auf.

Die Unterrostung beträgt 3 mm nach 24 Stunden im Salzsprühtest. Nach einer Alterung von 35 Tagen bei Zimmertemperatur werden aus der Dispersion erneut Bleche beschichtet. Die Abscheidespannung und die Lackeigenschaften waren dieselben wie bei der Erstbeschichtung.

Vergleichsbeispiel

In einem mit Rührer, Rückflusskühler und Innentemperatur ausgestattetem Reaktionsgefäss werden je 20 Teile der Zulaufmischung 1 und 2 vorgelegt und 20 Teile Isopropanol hinzugefügt. Zulauf 1 besteht aus 35 Teilen des Umsetzungsproduktes aus Butandiolmonoacrylat und durch Caprolactam halbverkapptem Toluoldiisocyanat analog DE-A 2454253 und 25 Teilen Isopropanol. Zulauf 2 besteht aus 21 Teilen 2-Hydroxypropylacrylat, 10 Teilen Acrylsäure, 34 Teilen Isobutylacrylat und 2 Teilen Azobisisobutyronitril als Initiator und einem Teil t-Dodecylmercaptan als Regler. Die Vorlage wurde auf 80°C aufgeheizt, Zulauf 1 und 2 wurden während 4 Stunden gleichmässig zugegeben. Es wurde eine Stunde lang nachpolymerisiert, dann 1 Teil Initiator hinzugegeben und wiederum eine Stunde lang bei 80°C nachpolymerisiert.

Man erhält eine klare Lösung eines Harzes mit einem K-Wert von 20, einem Feststoffgehalt von 71% und einer Säurezahl von 72,2.

Prüfung als Klarlack

Gemäss Beispiel 1 wird eine 10%ige wässrige Dispersion hergestellt, die das Harz zu 70% mit Dimethyläthanolamin neutralisiert enthält. Der nach 2 Minuten bei 150 V auf nicht vorbehandeltem Stahlblech erhaltene Lacküberzug wird 30 Minuten bei 170°C eingebrannt. Er ist nicht acetonbeständig und weist eine Pendelhärte von nur 50 Sekunden bei einer Erichsen-Tiefung von 10 mm auf. Die Unterrostung beträgt 20 mm nach 96 Stunden im Salzsprühtest.

Nach 35tägiger Alterung des Bades bei Zimmertemperatur wurden aus der Dispersion erneut Bleche beschichtet. Die Acetonbeständigkeit und der Korrosionsschutz hatten sich weiter verschlechtert.

**Patentansprüche**

1. Lackbindemittel auf Basis eines Carboxylgruppen und verkappte Isocyanatgruppen enthaltenden Copolymerisats, das durch zumindest teilweise Salzbildung mit Ammoniak oder einer organischen Base wasserlöslich oder wasserdispergierbar ist, dadurch gekennzeichnet, dass das Copolymerisat einpolymerisiert enthält

(A) mindestens eine $\alpha,\beta$-olefinisch ungesättigte Carbonsäure mit 3 bis 5 Kohlenstoffatomen oder einen Halbester einer $\alpha,\beta$-olefinisch ungesättigten bis 5 Kohlenstoffatome enthaltenden Dicarbonsäure,

(B) 20 bis 40 Gewichtsprozent eines mit einem CH-, OH- oder NH-aciden Verkappungsmittel verkappten N(1-alkenyl)-isocyanats,

(C) 0 bis 40 Gewichtsprozent einer oder mehrerer copolymerisierbarer olefinisch ungesättigter Verbindungen mit gegenüber Isocyanatgruppen reaktiven Wasserstoffatomen und

(D) 0 bis 75 Gewichtsprozent einer oder mehrerer unter (A) bis (C) nicht genannter copolymerisierbaren olefinisch ungesättigten Verbindungen,

mit der Massgabe, dass das Copolymerisat eine Säurezahl zwischen 35 und 150 (mg KOH/g Copolymerisat) sowie ein mittleres Molekulargewicht zwischen 1000 und 20000 aufweist und die Summe der unter (A) bis (D) genannten Prozentzahlen 100 ist.

2. Lackbindemittel nach Anspruch 1, dadurch gekennzeichnet, dass das Copolymerisat 15–35 Gewichtsprozent der Komponente (C) einpolymerisiert enthält.

3. Lackbindemittel nach Anspruch 1 oder 2, dadurch gekennzeichnet, dass das Äquivalenzverhältnis der reaktiven Wasserstoffatome der Komponente (C) zu den verkappten Isocyanatgruppen im Copolymerisat etwa 1:1 beträgt.

4. Lackbindemittel nach einem der vorhergehenden Ansprüche, dadurch gekennzeichnet, dass als Komponente (B) ein Addukt aus Vinylisocyanat oder Propenylisocyanat und Cyclohexanol, tert.-Butanol oder $\varepsilon$-Caprolactam im Molverhältnis Isocyanat/Verkappungsmittel von 1:1 verwendet wird.

5. Verwendung des Lackbindemittels nach einem der vorhergehenden Ansprüche als selbstvernetzendes Bindemittel für die anodische Elektrotauchlackierung metallischer Gegenstände.

6. Verwendung des Lackbindemittels nach Anspruch 1 in Kombiantion mit einem polyfunktionellen Vernetzungsmittel als fremdvernetzendes Bindemittel für die anodische Elektrotauchlackierung metallischer Gegenstände.

**Revendications**

1. Liant pour vernis à base d'un copolymère contenant des groupes carboxyle et des groupes isocyanate bloqués, rendu hydrosoluble ou dispersible dans l'eau par une salification au moins partielle par l'ammoniac ou une base organique, caractérisé en ce que le copolymère contient en liaison copolymère:

(A) au moins un acide carboxylique à insaturation α,β-oléfinique avec 3 à 5 atomes de carbone ou un hémiester d'un acide dicarboxylique à insaturation α,β-oléfinique avec jusqu'à 5 atomes de carbone;

(B) 20 à 40% en poids d'un isocyanate de N-(1-alcényle) bloqué par un agent de blocage à groupe CH-, OH- ou NH-acide;

(C) 0 à 40% en poids d'un ou de plusieurs composés à insaturation oléfinique copolymérisables, possédant des atomes d'hydrogène réactifs vis-à-vis des groupes isocyanate et

(D) 0 à 75% en poids d'un ou de plusieurs composés à insaturation oléfinique copolymérisables non mentionnés sub (A) à (C),

avec la condition que le copolymère possède un indice d'acide (mg KOH par g de copolymère) compris entre 35 et 150 et un poids moléculaire moyen compris entre 1000 et 20000, la somme des pourcentages cités sub (A) à (D) étant égale à 100.

2. Liant pour vernis suivant la revendication 1, caractérisé en ce que le copolymère contient 15 à 35% en poids du composant (C) en liaison copolymère.

3. Liant pour vernis suivant la revendication 1 ou 2, caractérisé en ce que le rapport d'équivalence des atomes d'hydrogène réactifs du composant (C) et des groupes isocyanate bloqués du copolymère est approximativement de 1:1.

4. Liant pour vernis suivant l'une des revendications précédentes, caractérisé en ce que l'on emploie comme composant (B) un produit d'addition d'isocyanate de vinyle ou d'isocyanate de propényle et de cyclohexanol, de butanol tertiaire ou de ε-caprolactame dans un rapport molaire isocyanate-agent de blocage de 1:1.

5. Utilisation d'un liant suivant l'une des revendications précédentes comme liant auto-réticulant pour le vernissage électrophorétique anodique par immersion d'objets métalliques.

6. Utilisation d'un liant suivant la revendication 1 en combinaison avec un agent de réticulation polyfonctionnel comme liant à réticulation extrinsèque pour le vernissage électrophorétique anodique par immersion d'objets métalliques.

**Claims**

1. A surface coating binder based on a copolymer which contains carboxyl groups and blocked isocyanate groups, and which is soluble or dispersible in water as a result of at least partial salt formation with ammonia or an organic base, characterized in that the copolymer contains, as copolymerized units,

(A) at least one α,β-olefinically unsaturated carboxylic acid of 3 to 5 carbon atoms or a half-ester of an α,β-olefinically unsaturated dicarboxylic acid containing up to 5 carbon atoms,

(B) 20 to 40% by weight of an N(1-alkenyl)-isocyanate blocked with a CH-, OH- or NH-acidic blocking agent,

(C) 0 to 40% by weight of one or more copolymerizable olefinically unsaturated compounds with hydrogen atoms capable of reacting with isocyanate groups, and

(D) 0 to 75% by weight of one or more copolymerizable olefinically unsaturated compounds not mentioned under (A) to (C),

with the proviso that the copolymer has an acid number between 35 and 150 (mg KOH/g copolymer) and a mean molecular weight between 1000 and 20,000, and the sum of the percentages given under (A) to (D) is 100.

2. A surface coating binder as claimed in claim 1, characterized in that the copolymer contains from 15 to 35% by weight of copolymerized units of component (C).

3. A surface coating binder as claimed in claim 1 or 2, characterized in that the equivalence ratio of the reactive hydrogen atoms of component (C) to the blocked isocyanate groups in the copolymer is about 1:1.

4. A surface coating binder as claimed in any of the preceding claims, characterized in that an adduct of vinyl isocyanate or propenyl isocyanate and cyclohexanol, tert.-butanol or ε-caprolactam in a molar ratio of isocyanate to blocking agent of 1:1 is used as component (B).

5. Use of a surface coating binder as claimed in any of the preceding claims as self-crosslinking binder for the anodic electrocoating of metal objects.

6. Use of a surface coating binder as claimed in claim 1 in combination with a polyfunctional crosslinking agent as binder requiring the use of an additional crosslinking agent, for the anodic electrocoating of metal objects.